(19) Europäisches Patentamt / European Patent Office / Office européen des brevets

(11) **EP 4 292 103 B1**

(12) **EUROPEAN PATENT SPECIFICATION**

(45) Date of publication and mention
of the grant of the patent:
**04.02.2026 Bulletin 2026/06**

(21) Application number: **22771896.2**

(22) Date of filing: **11.02.2022**

(51) International Patent Classification (IPC):
*H01J 45/00* (2006.01)     *G21H 1/10* (2006.01)
*G21D 7/04* (2006.01)

(52) Cooperative Patent Classification (CPC):
**H01J 45/00; G21H 1/106;** G21D 7/04

(86) International application number:
**PCT/US2022/016057**

(87) International publication number:
**WO 2022/197391 (22.09.2022 Gazette 2022/38)**

(54) **STRUCTURED PLASMA CELL ENERGY CONVERTER FOR A NUCLEAR REACTOR**

STRUKTURIERTER PLASMAZELLENENERGIEWANDLER FÜR EINEN KERNREAKTOR

CONVERTISSEUR D'ÉNERGIE À CELLULE À PLASMA STRUCTURÉE POUR RÉACTEUR NUCLÉAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.03.2021 US 202117202952**

(43) Date of publication of application:
**20.12.2023 Bulletin 2023/51**

(73) Proprietor: **Lo, Austin
Traverse City, Michigan 49684 (US)**

(72) Inventor: **Lo, Austin
Traverse City, Michigan 49684 (US)**

(74) Representative: **Witte, Weller & Partner
Patentanwälte mbB
Postfach 10 54 62
70047 Stuttgart (DE)**

(56) References cited:
WO-A1-2018/204470     JP-A- 2008 198 469
JP-A- 2020 522 681      US-A- 3 578 992
US-A- 3 983 423          US-A1- 2017 133 956

US-A1- 2019 371 582     US-A1- 2020 274 045

• **AUSTIN TROY LO: "Fission plasmas and their novel application to power producing nuclear reactors in space", 2020, pages 1 - 117, XP093160233, Retrieved from the Internet <URL:https://escholarship.org/uc/item/1x52n1gw> [retrieved on 20240507]**
• **PARAMONOV D V ET AL: "A REVIEW OF CESIUM THERMIONIC CONVERTERS WITH DEVELOPED EMITTER SURFACES", ENERGY CONVERSION AND MANAGEMENT, ELSEVIER SCIENCE PUBLISHERS, OXFORD, GB, vol. 38, no. 6, April 1997 (1997-04-01), pages 533 - 549, XP000683813, ISSN: 0196-8904, DOI: 10.1016/S0196-8904(96)00067-2**
• **MANIKOPOULOS C N ET AL: "The advanced thermionic converter with microwave power as an auxiliary ionization source", ENERGY CONVERSION,, vol. 18, no. 3, 1 January 1978 (1978-01-01), pages 171 - 178, XP025454233, ISSN: 0013-7480, [retrieved on 19780101], DOI: 10.1016/0013-7480(78)90016-5**

## Description

### FIELD

The present disclosure relates generally to a structured plasma cell energy converter for a nuclear reactor.

### BACKGROUND

This section provides background information related to the present disclosure and is not necessarily prior art.

Thermionic Energy Conversion (TEC) systems provide a direct heat to electric energy conversion by generating electricity from thermionic emission. TEC systems provide a benefit over traditional power plants because the TEC system eliminates the dynamic heat to electric energy conversion methods. In particular, TEC systems use heat to emit electrons from an electron-emitting material in order to produce electric energy. In some instances, the amount of heat applied to the electron-emitting material is directly proportional to the amount of electric energy the TEC system generates. However, the amount of heat required to generate electric energy in the TEC system is a potential limiting factor. Increasing the amount of electric energy output that is independent of the amount of heat applied to the system may allow for broader application of TEC systems for electrical energy production. Austin Troy Lo: "Fission plasmas and their novel application to power producing nuclear reactors in space", 2020, pages 1-117, XP093160233, retrieved from the Internet: URL: https://escholarship.org/uc/item/1x52nlgw, discloses a fuel element for a nuclear reactor.

### SUMMARY

According to the present disclosure, a structured plasma cell and a method as defined in the independent claims are provided. Further embodiments are defined in the dependent claims. Although the scope is only defined by the claims, the below embodiments, examples, and aspects are present for aiding in understanding the background and advantages.

One aspect of the disclosure provides a structured plasma cell as defined in claim 1. The structured plasma cell includes a first electrode including a first plurality of micro-cavities and a first plasma disposed within one or more micro-cavities of the first plurality of micro-cavities. The structured plasma cell also includes a second electrode including a second plurality of micro-cavities and a second plasma disposed within one or more micro-cavities of the second plurality of micro-cavities. The structured plasma cell also includes an inter-electrode gap disposed between the first electrode and the second electrode.

Implementations of this aspect of the disclosure may include one or more of the following optional features. In some examples, the structured plasma cell further includes a bulk plasma disposed within the inter-electrode gap. In other examples, the structured plasma cell further includes an insulator disposed within the inter-electrode gap. Here, the insulator may include conductive paths configured to electrically connect one or more of the first plurality of micro-cavities with one or more of the second plurality of micro-cavities. Optionally, plasma may be disposed within the conductive paths of the insulator.

The first plurality of micro-cavities of the first electrode are disposed on a surface and within a body of the first electrode. In these implementations, the first plurality of micro-cavities disposed on the surface of the first electrode are directly exposed to the inter-electrode gap. A quantity of the first plurality of micro-cavities may be less than a quantity of the second plurality of micro-cavities. In some examples, the first electrode includes a plurality of channels configured to electrically connect a first micro-cavity of the first plurality of micro-cavities with a second micro-cavity of the second plurality of micro-cavities. The first plasma may include a sheath surrounding the first plasma.

Another aspect of the disclosure provides a method of operating a structured plasma cell to produce electricity as defined in claim 7. The structured plasma cell includes a first electrode including a first surface and a first plasma, the first surface defining a first micro-cavity and the first plasma disposed within the first micro-cavity. The structured plasma cell also includes a second electrode including a second surface and a second plasma, the second surface defining a second micro-cavity and the second plasma disposed within the second micro-cavity. The method includes generating, by an electromagnetic (EM) source, and EM field and propagating the EM field in a direction parallel to the second surface. The method also includes increasing, by the EM field, a temperature of electrons disposed within the second plasma.

This aspect may include one or more of the following optional features. In some implementations, the first surface includes a conductive material. In some examples, the method further includes absorbing the EM field into the second plasma. In these examples, the method further includes ionizing the first plasma using charged particles from a nuclear reaction, emitting electrons from the first surface of the first electrode into the first plasma disposed within the first plurality of micro-cavities, conducting the emitted electrons from the first plurality of micro-cavities through an inter-electrode gap to the second plurality of micro-cavities, and collecting the emitted electrons at the second surface of the second electrode.

The method may further include providing an insulator at an inter-electrode gap disposed between the first electrode and the second electrode. Optionally, the EM field may include one of a radiofrequency wave or a microwave. In some examples, the first electrode includes a dielectric material. The first electrode includes a first body that is concealed from the first plasma. The increased temperature of the electrons in the second plasma may increase an amount of electricity produced by the structured plasma cell. In some examples, the first plurality of micro-cavities is less than the second plurality of micro-cavities.

Further areas of applicability will become apparent from the description provided herein. The description and specific examples in this summary are intended for purposes of illustration only and are not intended to limit the scope of the present disclosure.

## DRAWINGS

The drawings described herein are for illustrative purposes only of selected configurations and not all possible implementations, and are not intended to limit the scope of the present disclosure.

Figure 1A is a functional block diagram of an exemplary structured plasma cell energy converter for a nuclear reactor, according to the principles of the present disclosure.
Figure 1B is an exploded view of an electrode from the structured plasma cell energy converter of Figure 1A, according to the principles of the present disclosure.
Figure 2 is a functional block diagram of an exemplary structured plasma cell energy converter with an insulator, according to the principles of the present disclosure.
Figure 3A is a schematic top view of an exemplary structured plasma cell energy converter arrangement, according to the principles of the present disclosure.
Figure 3B is a schematic side view of the structure plasma cell energy converter of Figure 3A operating using electromagnetic field ionization, according to the principles of the present disclosure.
Figure 4 is a flow diagram of a method of generating electricity with the structured plasma cell energy converter of Figure 3B, according to the principles of the present disclosure.

Corresponding reference numerals indicate corresponding parts throughout the drawings.

## DETAILED DESCRIPTION

Example configurations will now be described more fully with reference to the accompanying drawings. Example configurations are provided so that this disclosure will be thorough, and will fully convey the scope of the disclosure to those of ordinary skill in the art. Specific details are set forth such as examples of specific components, devices, and methods, to provide a thorough understanding of configurations of the present disclosure. It will be apparent to those of ordinary skill in the art that specific details need not be employed, that example configurations may be embodied in many different forms, and that the specific details and the example configurations should not be construed to limit the scope of the disclosure.

Thermionic energy conversion (TEC) is a direct heat to electric energy conversion process which generates electricity from thermionic emission. In particular, TEC systems produce electricity by emitting electrons from a first electrode (i.e., emitter or cathode) that are collected at a second electrode (i.e., collector or anode). The space or gap disposed between the emitter and collector is referred to as an inter-electrode gap. As electrons emit from the emitter, the electrons collect in the inter-electrode gap creating the space charge effect. The space charge effect refers to the collection of negative charge from electrons near the surface of an electrode. That is, as the electrons collect in the inter-electrode gap and/or near the surface of the electrode, the negative charge of the electrons repel further emission of electrons. The space charge effect repels additional electrons from emitting from the emitter, thus, preventing additional electrons from travelling from the emitter to the collector.

Current implementations of TEC systems utilize a conductive medium in the inter-electrode gap to mitigate the space charge effect. In some examples, TEC devices include a conductive gas (i.e., a bulk plasma) in the inter-electrode gap. The bulk plasma in the inter-electrode gap mitigates the space charge effect by conducting the electrons across the inter-electrode gap. That is, the bulk plasma (e.g., cesium) is a conductive gas that conducts the electrons that emit from the emitter, through the conductive bulk plasma, to the collector. The bulk plasma facilitates the electrons travelling from the emitter through the inter-electrode gap to the collector such that the electrons do not collect in the inter-electrode gap creating the space charge effect. That is, without a conductive medium (e.g., bulk plasma) in the inter-electrode gap, the electrons are unable to conduct across the inter-electrode gap and instead collect at or near the surface of the emitter. Thus, the bulk plasma by conducting electrons through the inter-electrode gap mitigates the space charge effect.

However, in some implementations, the bulk plasma in the inter-electrode gap may not conduct electrons in a natural, pre-ionized state. Once the plasma ionizes, the plasma may conduct electrons from the emitter to the collector. In some examples, the bulk plasma may be ionized by coming into contact with the emitter, allowing the emitter to transmit electrons across the plasma. The plasma may be ionized by electrons emitted from the emitter such that the emitted electrons both ionize the plasma and traverse the inter-electrode gap.

In other examples, the plasma is a diffusion-dominated plasma that ionizes from charged particles striking a neutral atom of the plasma and ionizing the neutral atom into an additional electron and an ion, also referred to as charged particle ionization. Here, charged particles may include fission fragments, alpha decay particles, and/or beta decay particles. In particular, TEC systems may include a neutron source that produces neutrons that are absorbed by a net neutron-producing material. The net neutron-producing material can either be fissile (e.g., U-235) - that is, capable of a fission reaction after absorbing a neutron - or fertile (e.g., U-238) - that is, not capable of undergoing a fission reaction after absorbing a neutron. After absorbing the neutron, the net neutron-producing material becomes unstable splitting into fission fragments. In some implementations, the fission fragments undergo beta decay such that a fission fragment converts one of its neutrons into a proton by releasing an additional electron referred to herein as a "beta decay particle." The fission fragments and/or beta decay particles (collectively referred to as charged particles) generated by a nuclear reaction (e.g., fission and/or beta decay) may ionize the plasma of the TEC system. Thus, the charged particles (e.g., fission fragments and/or beta decay particle) ionize the plasma and the electrons emitted from the emitter traverse the inter-electrode gap to the collector to produce electricity.

The quantity of electrons that emit from the emitter to the collector represents the current density of the TEC system. That is, the higher the current density of the TEC system the greater amount of electricity the TEC system generates. The current density output of the TEC system is dependent on a surface area ratio between the electrodes (e.g., emitter and collector) and the plasma. In particular, an increased surface area between the emitter and the plasma increases the quantity of electrons that emit from the emitter into the plasma. An increased surface area between the collector and the plasma increases the quantity of electrons that collect at the collector to produce the electric current.

Implementations herein are directed toward a structured plasma cell energy converter for a nuclear reactor. The structured plasma cell includes electrodes (e.g., emitter and collector) that include a plurality of micro-cavities. The micro-cavities are configured to increase the surface area of the electrodes. Thus, the micro-cavities, by increasing the surface area of the electrodes, increases the surface area ratio between the plasma and the electrodes. In some examples, the increased surface area ratio between the plasma and the electrodes increases the amount of electricity produced by the TEC system. In other examples, the increased surface area ratio between the plasma and the electrodes allows the TEC system to operate at a lower temperature while the current output of the TEC system remains the same.

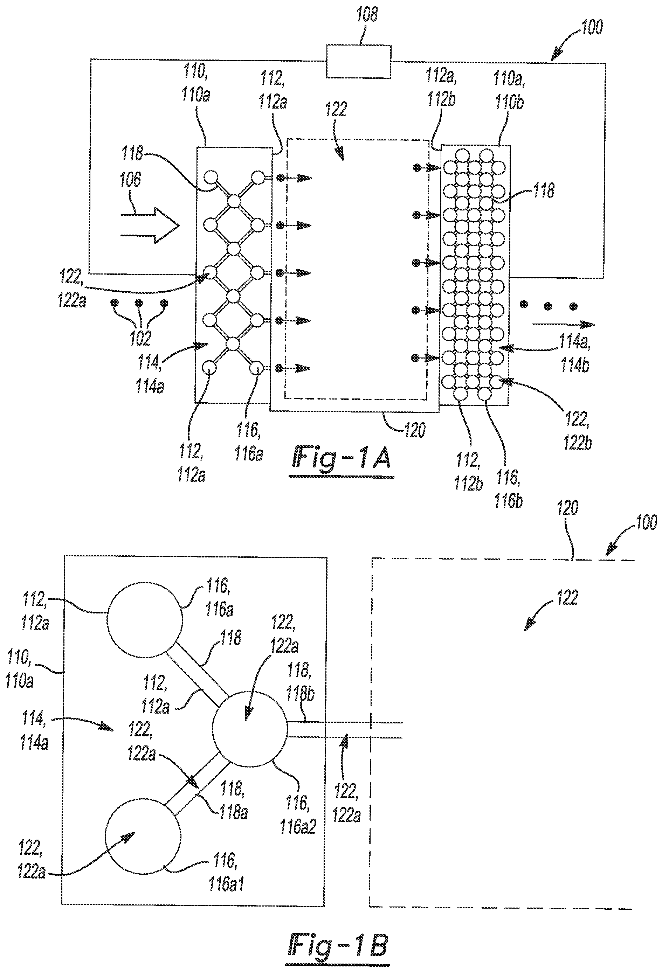

Referring now to FIG. 1A, in some examples, a structured plasma energy cell system 100 (interchangeably referred to as TEC system 100) includes electrodes 110, an inter-electrode gap 120, a heat source 106, and a load 108. The electrodes 110 include an emitter 110a and a collector 110b. The emitter 110a is configured to emit electrons 102 through the inter-electrode gap 120 to the collector 110b. That is, as the emitter 110a is heated by the heat source 106, the electrons 102 boil off the emitter 110a into the inter-electrode gap 120. The heat source 106 used to heat the emitter 110a may be any external heat source 106. In some examples, the heat source 106 generates heat from a nuclear reaction (e.g., fission and/or fusion). The collector 130 is configured to collect the electrons 102 that traverse the inter-electrode gap 120 from the emitter 110a. The electrons 102 collected by the collector 110b create an electric current that drives the load 108. The quantity of electrons 102 that traverse the inter-electrode gap 120 and drive the load 108 represents the amount of electricity produced by the structured plasma energy cell system 100.

In some implementations, the inter-electrode gap 120 includes a bulk plasma 122 referred to herein as plasma 122. The plasma 122, disposed within the inter-electrode gap 120, is configured to mitigate space charge. In particular, the plasma 122 may include a conductive gas (i.e., cesium) that conducts electrons 102 emitted from the emitter 110a through the inter-electrode gap 120 to the collector 110b. By conducting electrons 102 across the inter-electrode gap 120, the plasma 122 reduces the quantity of electrons 102 that collect at and/or near the emitter 110a thereby reducing the space charge effect. The plasma 122 may also include a sheath (not shown) that surrounds the conductive material of the plasma 122. The sheath may include a positively charged ion density that is greater than the electron density in the sheath. The greater density of positively charged ions in the sheath happens because the weight of the electron is less than the weight of the ion. The lower weight of the electron allows the electron to be more mobile than the ion, thus, the electrons escape the TEC system 100 (e.g., producing a current output) at a rate that is higher than the rate of ions escaping the TEC system 100.

The electrodes 110 may include an electrode surface 112 and an electrode body 114. In particular, the emitter 110a includes an emitter surface 112a and an emitter body 114a. The emitter surface 112a is directly exposed to the plasma 122 such that electrons 102 emit from the emitter surface 112a into the plasma 122. In some examples, the emitter surface 112a is directly exposed to the plasma 122 disposed within the inter-electrode gap 120. In other examples, the emitter surface 112a is directly exposed to the plasma 122 disposed outside of the inter-electrode gap 120. The emitter body 114a is surrounded by the emitter surface 112a such that the emitter body 114a is concealed from direct exposure of the plasma 122 disposed either within or outside of the inter-electrode gap 120.

The collector 110b may include a collector surface 112b and a collector body 114b. The collector surface 112b is directly exposed to the plasma 122 disposed within the inter-electrode gap 120 such that electrons 102 that traverse the plasma 122 through the inter-electrode gap 120 collect at the collector surface 112b. In some examples, the collector surface 112b is directly exposed to plasma 122 disposed within the inter-electrode gap 120. In other examples, the collector surface 112b is directly exposed to plasma 122 disposed outside of the inter-electrode gap 120. The collector body 114b is surrounded by the collector surface 112b such that the collector body 114b is concealed from direct exposure to the plasma 122 disposed either within or outside of the inter-electrode gap 120.

The output power or electricity of the TEC system 100 may be represented by:

$$P_{out} = IV_{out} \quad (1)$$

In equation (1), $P_{out}$ represents the output power or electricity produced by the TEC system 100, $I$ represents the current of the TEC system 100, and $V_{out}$ represents the output voltage of the TEC system 100. The output voltage $V_{out}$ of the TEC system 100 may be represented by:

$$V_{out} = (\phi_E - \phi_C) + V_{p,bias} \quad (2)$$

In equation (2), $V_{out}$ represents the output voltage of the TEC system 100, $\phi_E$ represents the emitter 110a work function, $\phi_C$ represents the collector 110b work function, and $V_{p,bias}$ represents the bias voltage applied to the plasma 122 in the inter-electrode gap 120. $V_{p,bias}$ may be represented by:

$$V_{p,bias} = \begin{cases} T_e \ln\left[A\dfrac{\left(1 + R/\mu - I/I_{th}\right)}{\left(AR/\mu + I/I_{th}\right)}\right], & V_E < V_p \\[2em] T_E \ln\left(\dfrac{1 + R/\mu}{R + I/I_{th}}\right) - T_e \ln\left(\dfrac{I/I_{th} + AR/\mu}{AR}\right), & V_E > V_p \end{cases} \quad (3)$$

In equation (3), $A$ represents the ratio of the emitter surface area to the collector 110b to the emitter 110a surface area, $R$ represents the ratio of plasma electron current to the thermionic current, $\mu$ represents the ratio of the plasma electron current to the ion current, $T_E$ represents the temperature of the emitter 110a, $T_e$ represents the temperature of the electrons, $I_{th}$ represents the thermionic emission current, $V_E$ represents the voltage potential at the emitter 110a, and $V_p$ represents the voltage potential of the plasma 122. Thus, equation 3 represents output voltage $V_{out}$ as a function of the current $I$ in terms of the thermionic emission current $I_{th}$ and the surface areas of the emitter 110a and collector 110b $A$. The current $I$ of the TEC system 100 and the thermionic emission current $I_{th}$ may be represented respectively by:

$$I = I_{th} + I_{e,E}\left(\frac{1}{\mu} - 1\right) \quad (4)$$

$$I_{th} = A_E \frac{4\pi e m_e k^2}{h^3} T_E^2 \, exp\left(-\frac{\phi_E}{kT_E}\right) \quad (5)$$

In equations (4) and (5), $A_E$ represents the surface area of the emitter 110a, $\phi_E$ represents the emitter 110a work function, $T_E$ represents the temperature of the emitter 110a, $e$ represents electron 102 charge in coulombs, $m_e$ represents electron 102 mass in kilograms, $k$ represents Boltzmann's constant in joules per kelvin, $h$ represents Planck's constant in joule seconds, and $I_{e,E}$ represents the electron current at the emitter 110a.

In some implementations, increasing the surface area of the electrodes 110 increases the output power $P_{out}$ of the TEC system 100. In particular, as shown by equations (1), (4), and (5) above, increasing the surface area $A_E$ of the emitter 110a causes the thermionic emission current $I_{th}$ to also increase thereby increasing the power output of the TEC system 100. Increasing the surface area $A_E$ of the emitter 110a may also allow the temperature of the emitter $T_E$ to decrease while the thermionic emission current $I_{th}$ remains the same. That is, the increased surface area $A_E$ of the emitter 110a allows the TEC system 100 to operate at a lower temperature $T_E$ while the output power $P_{out}$ remains the same. Operating TEC systems 100 at lower temperatures $T_E$ increases the life expectancy of the TEC system 100.

In some implementations, the surface area of the electrodes 110 is increased by increasing the size of the electrodes 110 which increases the volume $V$ of the TEC system 100. However, the TEC system 100 may include a volume $V$ constraint that prevents increasing the size of the electrodes 110 in order to increase the surface area $A_E$. The surface area $A_E$ is increased by providing a plurality micro-cavities 116 at the electrodes 110. Specifically, the emitter 110a includes a first plurality of micro-cavities 116a and the collector 110b may include a second plurality of micro-cavities 116b. The micro-cavities 116 may be voids, dimples, pores, micro-structures, or other suitable constructs, included at the electrode surface 112 and/or the electrode body 114. The micro-cavities 116 may include any suitable geometric shape, size, quantity, and/or configuration or combination thereof that is dependent upon the particular TEC system 100 application. For example, an electrode 110 may include a spherical micro-cavity 116 with a surface area of 10mm$^2$ per 1mm$^3$ volume of the electrode 110. In some examples, the quantity of the first plurality of micro-cavities 116a is less than the quantity of the second plurality of micro-cavities 116b at the collector 110b. The micro-cavities 116 increase the surface area of the surface 112 of electrode 110 (e.g., surface area of the emitter $A_E$) while the volume $V$ of the TEC system 100 remains the same.

In some examples, the micro-cavities 116 of the electrode 110 are disposed within the electrode body 114 such that the increased surface area of the electrode surface 112 is concealed from direct exposure to the plasma 122 disposed within the inter-electrode gap 120. In other examples, the micro-cavities 116 of the electrode 110 are disposed on the electrode surface 112 that is directly exposed to the inter-electrode gap 120. Here, the micro-cavities 116 disposed on the electrode surface 112 are also directly exposed to the plasma 122 disposed within the inter-electrode gap 120. The electrodes 110 may include any combination of micro-cavities 116 disposed on the electrode surface 112 and/or the electrode body 114.

The increased surface area of the electrode surface 112 created by the micro-cavities 116 may be configured to emit or collect electrons 102. For example, as the heat source 106 heats the emitter 110a the additional emitter surface 112a created by the micro-cavities 116 emits electrons 102 into the void created by the micro-cavities 116. The electrons 102 emitted from the emitter surface 112a into the micro-cavities 116 may collect at or near the emitter surface 112a creating the space charge effect at the micro-cavities 116. In some examples, the micro-cavities 116 of the electrodes 110 include plasma 122 configured to mitigate the space charge effect. In particular, a first plasma 122a may be disposed within each micro-cavity 116 disposed on the emitter 110a and a second plasma 122b may be disposed within each micro-cavity 116 disposed on the collector 110b. In some examples, the decreased surface area exposure between the emitter 110a and collector 110b surfaces creates reduced radiative losses improving the overall efficiency of the TEC system 100. The decreased surface area also significantly lowers the emission current $I$ and $T_E$ required to offset radiative losses.

Referring now to FIG. 1B, in some implementations, the electrodes 110 (e.g., emitter 110a and collector 110b) include one or more channels 118. The one or more channels 118 are configured to connect, and allow for fluid communication between, the one or more micro-cavities 116 with one or more other micro-cavities 116 and/or the inter-electrode gap 120. The one or more channels 118 include plasma 122 that provides a conductive medium (e.g., cesium) to conduct electrons 102. The plasma 122 disposed within the channels 118 allows electrons 102 to conduct between micro-cavities 116 of the electrode 110. In some examples, the first plasma 122a is disposed within the channels 118 of the emitter 110a. In other examples, the second plasma 122b is disposed within the channels of the collector 110b. For example, FIG. 1B illustrates an exploded view of an emitter 110a from the TEC system 100 with multiple channels 118 electrically connecting the micro-cavities 116a to other micro-cavities 116a and/or the inter-electrode gap 120. For sake of clarity only the emitter 110a is illustrated in FIG. 1B, however, it is understood that an exploded view of the collector 110b is substantially similar to the exploded view of the emitter 110a in FIG. 1B. The emitter 110a includes a first channel 118a that connects a first micro-cavity 116a1 disposed within the emitter body 114a to a second micro-cavity 116a2 disposed within the emitter body 114a. The first channel 118a includes the first plasma 122a that conducts electrons 102 between the first micro-cavity 116a1 and the second micro-cavity 116a2. The first channel 118a may also be configure to emit electrons 102 directly from the emitter surface 112a into the first plasma 122a disposed within the first channel 118a.

In some examples, the one or more channels 118 electrically connect and/or allows for electrical communication from the one more micro-cavities 116a to the plasma 122 disposed within the inter-electrode gap 120. For example, as shown in FIG. 1B, a second channel 118b connects the second micro-cavity 116a2 to the inter-electrode gap 120. The second channel 118b connects the second micro-cavity 116a2 to the plasma 122 disposed within the inter-electrode gap 120. The second channel 118b allows electrons 102 conducting between the first micro-cavity 116a1 and second micro-cavity 116a2 to conduct into the inter-electrode gap 120. Thus, the second channel 118b allows electrons 102 from the first micro-cavity 116a1 and second micro-cavity 116a2 to conduct into the inter-electrode gap 120 and produce an electric current for the TEC system 100. The one or more channels 118 may electrically connect any number of micro-cavities 116a to any number of other micro-cavities 116a (e.g., micro-cavities 116 disposed on the emitter surface 112a and/or the emitter body 114a). The one or more channels 118 may also act as a micro-cavity 116 by emitting (e.g., from the emitter 110a) or collecting (e.g., at the collector 110b) electrons 102 from the electrode surface 112 directly from the plasma 122 disposed within the channel 118. Here, the electrons 102 may emit directly into the one or more channels 118 and conduct to one or more of the micro-cavities 116 or the inter-electrode gap 120.

In some implementations, as the heat source 106 heats the emitter 110a and electrons 102 emit from the emitter surface 112a the electrons 102 enter the plasma 122 disposed within the micro-cavities 116a of the emitter 110a. Here, the electrons 102 may conduct, via the one or more channels 118, to another micro-cavity 116a of the emitter 110a and/or to the plasma 122 disposed within the inter-electrode gap 120. Once the electron 102 reaches the plasma 122 disposed within the inter-electrode gap 120, the electron 102 conducts to a micro-cavity 116b disposed on the collector 110b via the one or more channels 118 of the collector 110b. In some examples, the electron 102 collects at the collector surface 112b and produces an electric current to drive the load 108.

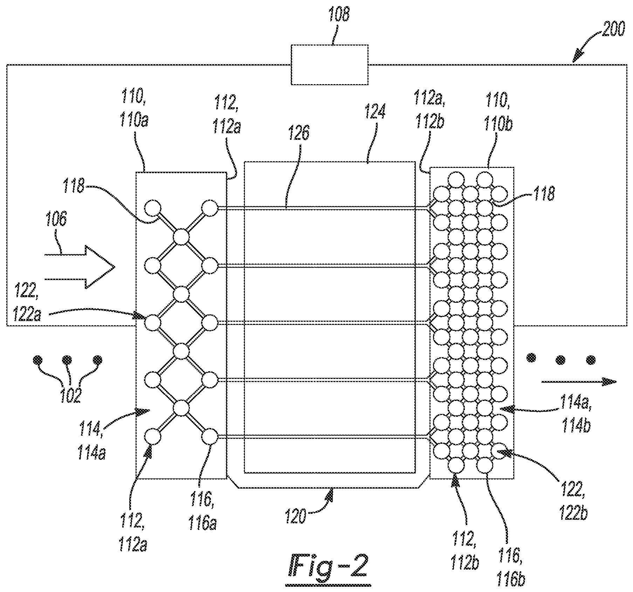

Referring now to FIG. 2 a structured plasma energy cell system 200 (interchangeably referred to as TEC system 200) may be substantially similar to the TEC system 100 except as described herein. The TEC system 200 includes the electrodes 110, the inter-electrode gap 120, the heat source 106, and the load 108. In some implementations, TEC system 200 includes an insulator 124 in the inter-electrode gap 120. The insulator 124 is configured to provide electrical isolation between the emitter 110a and the collector 110b. That is, the insulator 124 includes a non-conductive material that prevents electrons 102 from traversing from the emitter 110a to the collector 110b. The insulator 124 may also prevent an electrical short from occurring between the emitter 110a and the collector 110b. In some examples, the solid insulator 124 material (e.g., ceramic) provides structural support for the TEC system 200 in the inter-electrode gap 120.

In some implementations, the insulator 124 disposed within the inter-electrode gap includes conductive paths 126. The conductive paths 126 are configured to conduct electrons 102 from the emitter 110a to the collector 110b through the inter-electrode gap 120. Because the insulator prevents electrons 102 from conducting from the emitter 110a to the collector 110b the conductive paths 126 conduct electrons from the emitter 110a to the collector 110b to produce a current output and drive the load 108. The conductive paths 126 may include a conductive medium (e.g., plasma 122) that conducts the electrons 102 from the emitter 110a to the collector 110b.

Each conductive path 126 may connect one or more micro-cavities 116a of the emitter 110a to one or more micro-cavities 116b of the collector 110b. In some examples, the conductive path 126 connects a single micro-cavity 116a disposed on the emitter 110a to one or more micro-cavities 116b disposed on the collector 110b. In some implementations, as the heat source 106 heats the emitter 110a and electrons 102 emit from the emitter surface 112a the electrons 102 enter the first plasma 122a disposed within the micro-cavities 116a of the emitter 110a. Here, the electrons 102 may conduct, via the one or more channels 118, to another micro-cavity 116a of the emitter 110a and/or to the conductive paths 126 of the insulator 124. Once the electron 102 reaches the conductive path 126, the plasma 122 disposed within the conductive path 126 conducts the electron to one or more micro-cavities 116b disposed on the collector 110b. In some examples, the electron 102 collects at the collector surface 112b and produces an electric current to drive the load 108.

In some implementations, TEC devices utilize electromagnetic (EM) fields to ionize the plasma. However, current TEC devices (e.g., TEC devices that include electrodes without micro-cavities) use electrodes that have a conductive surface. The conductive surface of the electrodes shields the plasma by absorbing the EM field energy such that the plasma does not absorb any of the EM field energy. The conductive surface of the electrodes allows electrons to emit from the emitter and be absorbed by the collector. Some techniques attempt to reduce the thickness of the electrode material such that the conductive surface of the electrodes do not absorb all of the EM field energy and a portion of the EM field energy is absorbed by the plasma. However, these techniques reduce the overall life expectancy of the TEC devices because the thin electrode materials are unable to withstand the high operating temperature of the TEC device.

Implementations herein are directed towards a method of producing electricity with a TEC system with electrodes that include micro-cavities. These implementations include generating EM fields that propagate parallel to the conductive surfaces of the electrodes. The parallel propagation direction of the EM fields relative to the conductive surfaces of the electrodes allows the EM fields to propagate into the micro-cavities of the electrodes and absorb into the plasma disposed within the micro-cavities and channels of the electrodes. The absorption of the EM fields into the plasma ionizes and/or increases the temperature of electrons in the plasma thereby increasing the efficiency of the TEC system and ionizing the plasma.

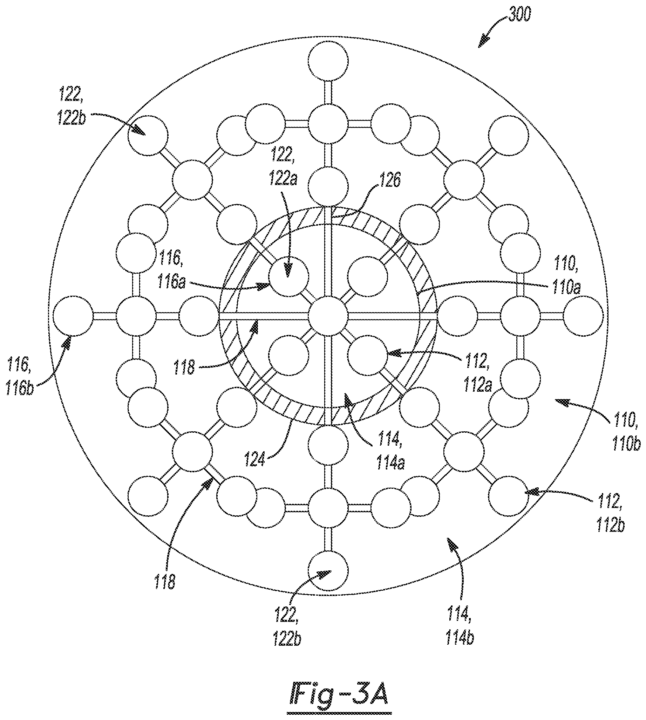

FIG. 3A illustrates a top view of a structured plasma energy cell system 300 (interchangeably referred to as TEC system 300). The TEC system 300 includes an emitter 110a that includes a first plurality of micro-cavities 116a that are disposed on the emitter surface 112a and within the emitter body 114a. The TEC system 300 also includes a collector 110b that includes a second plurality of micro-cavities 116b that may be disposed on the collector surface 112b or the collector body 114b. In some examples, the electrodes 110 (e.g., emitter 110a and collector 110b) include one or more channels 118 that include a first or second plasma 122a, 122b that electrically connects the one or more micro-cavities 116 to one or more different micro-cavities 116 of the electrode 110. In other examples, the channels 118 of the electrodes electrically connect the one or more micro-cavities 116 to a conductive path 126 of the insulator 124. The insulator 124 is disposed in the inter-electrode gap between the emitter 110a and the collector 110b. The insulator 124 includes one or more conductive paths 126 that include a plasma 122 disposed within the conductive path 126 that electrically connects the first plurality of micro-cavities 116a to the second plurality of micro-cavities 116b. As illustrated in FIG. 3A, the quantity of the second plurality of micro-cavities 116b is greater than the quantity of the first plurality of micro-cavities 116a.

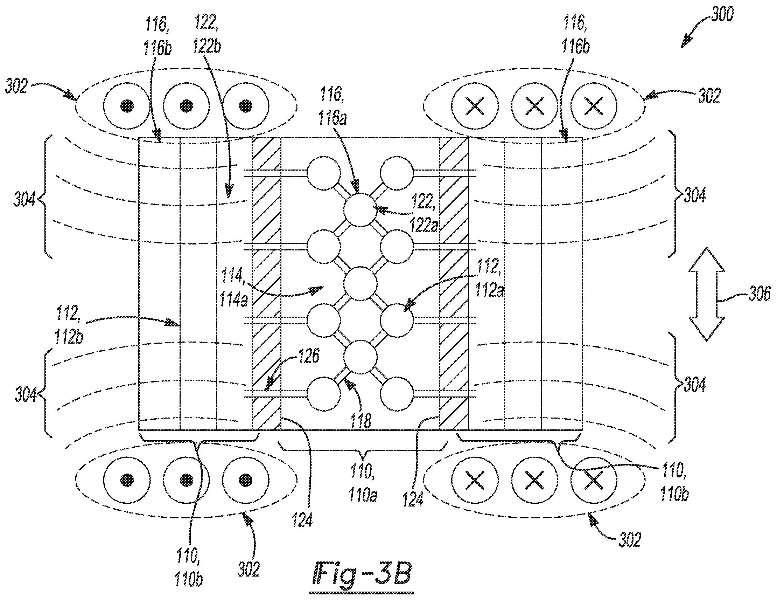

FIG. 3B illustrates a side view of the structured energy cell system 300 of FIG. 3A using EM field ionization. In some implementations, the TEC system 300 generates electricity using one or more EM sources 302 to produce EM fields 304 for EM field ionization. Here, the EM sources 302 produce any type of EM field such as, for example, radiofrequency waves or microwaves. As the EM sources 302 generate EM fields 304, the EM fields 304 travel in a propagation direction 306. The propagation direction 306 of the EM fields travels parallel to conductive surfaces of the electrodes 110. The surface 112 of the electrodes 110 includes conductive material configured to emit and collect electrons 102 from the conduction band of the electrodes 110. That is, the conductive material at the surface 112 of the electrodes 110 allow electrons 102 to escape and collect at the surface 112 of the electrodes 110. Thus, the surface 112 may interchangeably be referred to as the conductive surface 112 herein. The conductive surface 112 may be disposed on the emitter surface 112a, the collector surface 112b, the one or more channels 118, and/or the one or more conductive paths 126. The body 114 of the electrodes 110 may include a dielectric material that help contain the electrons 102 within the electrode 110.

In some examples, the conductive surfaces 112 absorb the EM fields 304 and shield any of the EM fields 304 from absorbing into the plasma 122. However, generating the EM fields 304 in the propagation direction 306 that is parallel to the conductive surfaces 112 allows the EM fields 304 absorb into the plasma 122. Specifically, the micro-cavities 116 provide holes in which the EM fields 304 can penetrate. The channels 118 and conductive paths 126 that are connected to the micro-cavities 116 provide additional parallel conductive surfaces 112 that the EM fields 304 can propagate through. Thus, the micro-cavities 116, channels 118, and conductive paths 126 may each provide a parallel conductive surface 112 for the EM fields 304 to propagate through. As the EM fields 304 propagate through the parallel conductive surfaces 112 the EM fields 304 absorb into the plasma 122 disposed within the conductive surfaces 112. By absorbing into the plasma 122, the energy of the EM fields 304 ionize the plasma 122, referred to as EM field ionization. EM field ionization may be used additionally and/or alternatively to charged particle ionization to ionize the plasma 122. In some examples, as the EM fields 304 absorb into the plasma 122 the plasma ionizes. In other examples, the EM fields 304 may increase the temperature of the electrons 102 disposed within the plasma 122. That is, as the EM field 304 absorb into the plasma 122 the electrons 102 are excited (i.e., move) causing the electrons 102 to heat up. The increased temperature of the electrons 102 is directly proportional to the plasma voltage bias (e.g., $V_{p,bias}$ from equation 2). Thus, the increased temperature of the electrons 102 from the EM fields 304 absorbing into the plasma 122 may increase the plasma voltage bias $V_{p,bias}$ thereby increasing the output voltage $V_{out}$ and the output power $P_{out}$.

In other implementations, the EM sources 302 generate EM fields 304 that ionize only one of the first plasma 122a or the second plasma 122b. For example, the EM field 304 may travel in a propagation direction 306 that is parallel only to the conductive surface 112b of the collector 110b. Specifically, the EM fields 304 propagating in the propagation direction 306 parallel to the conductive surface 112b allow the EM fields 304 to absorb into the second plasma 122b, thereby increasing the temperature of the electrons 102 disposed within the second plasma 122b. Here, the micro-cavities 116b and channels 118 of the collector 110b provide holes and/or voids in which the EM fields 304 can penetrate and absorb into the plasma 122 122b disposed within the conductive surfaces 112b.

In these implementations, the EM sources 302 generate EM fields 304 in the propagation direction 306 that is parallel only to the conductive surface 112b of the collector 110b, such that the propagation direction 306 is transverse (e.g., not parallel) to the conductive surface 112a of the emitter 110a. The energy of the EM fields 304 travelling in the propagation direction 306 that is transverse to the conductive surface 112a of the emitter 110a is absorbed by the conductive surface 112a of the emitter 110a. Thus, the EM fields 304 are unable to penetrate the holes of the micro-cavities 116a and channels 118 of the emitter 110a in order to absorb into and ionize the first plasma 122a. Here, the EM fields 304 travelling in the propagation direction 306 parallel to the conductive surface 112b and transverse to the conductive surface 112a ionize only the second plasma 122b while the EM fields 304 are unable to ionize the first plasma 122a.

In some examples, the TEC system 300 uses a combination of charged particle ionization and EM field ionization. For example, the TEC system 300 may use EM field ionization to ionize the second plasma 122b disposed within the collector 110b and charged particle ionization to ionize the first plasma 122a disposed within the emitter 110a. In this example EM sources 302 generate EM fields 304 in a propagation direction parallel to the conductive surface 112b of the collector 110b. The EM fields 304 penetrate the micro-cavities 116b and channels 118 of the collector 110b absorbing into the second plasma 122b (e.g., EM field ionization), thus, ionizing and/or increasing the temperature of the second plasma 122b. Continuing with the example, the TEC system 300 ionizes the first plasma 122a using charged particle ionization. The TEC system 300 generates charged particles (e.g., fission fragments, alpha decay particles, and/or beta decay particles) from a nuclear reaction (e.g., fission and/or beta decay) that enter and ionize the first plasma 122a. Here, the charged particles ionize the first plasma 122a to mitigate the space charge effect and electrons emit from the emitter 110a to traverse the inter-electrode gap 120 to the collector 110b. Here, the first plasma 122a ionizes using charged particle ionization and the second plasma 122b ionizes using EM field ionization. In other examples, the TEC system 300 uses both EM field ionization and charged particle ionization to ionize the first and second plasma 122a, 122b. Any combination of EM field ionization and charged particle ionization may be used to ionize the first and second plasma 122a, 122b.

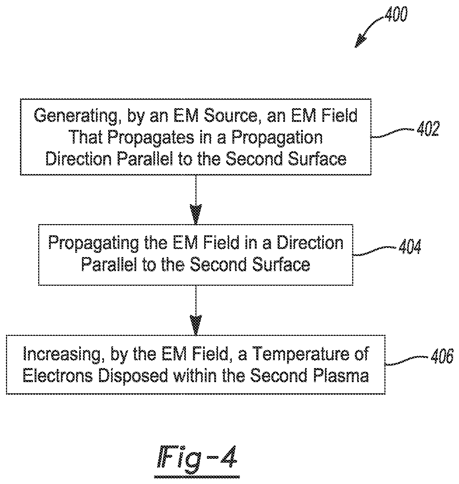

With reference to FIG. 4, a method 400 of operating a structured plasma cell to produce electricity. The structured plasma cell includes a first electrode (emitter 110a) including a first surface 112a and a first plasma 122a. The first surface 112a defines a first micro-cavity 116a and the first plasma 122a is disposed within the first micro-cavity 116a. The structured plasma cell also include a second electrode (collector 110b) including a second surface 112b and a second plasma 122b. The second surface 112b defines a second micro-cavity 116b and the second plasma 122b is disposed within the second micro-cavity 116b. At step 402, the method 400 may include generating, by an EM source 302, an EM field 304. The EM field 304 may include any type of EM field such as a radiofrequency wave or a microwave. At step 404, the method 400 includes propagating the EM field 304 in a direction parallel to the second surface (e.g., conductive surface 112b). At step 406, the method 400 includes increasing, by the EM field 304, a temperature of the electrons 102 disposed within the second plasma 122b.

Each of the configurations described in the detailed description above may include any of the features, options, and possibilities set out in the present disclosure, including those under the other independent configurations, and may also include any combination of any of the features, options, and possibilities set out in the present disclosure and figures.

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional or alternative steps may be employed.

When an element or layer is referred to as being "on," "engaged to," "connected to," "attached to," or "coupled to" another element or layer, it may be directly on, engaged, connected, attached, or coupled to the other element or layer, or intervening elements or layers may be present. In contrast, when an element is referred to as being "directly on," "directly engaged to," "directly connected to," "directly attached to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

The foregoing description has been provided for purposes of illustration and description. It is not intended to be exhaustive or to limit the disclosure. Individual elements or features of a particular configuration are generally not limited to that particular configuration, but, where applicable, are interchangeable and can be used in a selected configuration, even if not specifically shown or described. The same may also be varied in many ways. Such variations are not to be regarded as a departure from the disclosure, and all such modifications are intended to be included within the scope of the disclosure. The scope of the invention is defined by the appended claims.

## Claims

1.   A structured plasma cell for a structured plasma cell energy converter for a nuclear reactor, the structured plasma cell comprising:

a first electrode (110a) including a body (114a), a surface (112a) surrounding the body (114a), and a first plurality of micro-cavities (116a) disposed on the surface (112a) and within the body (114a) of the first electrode (110a);
a first plasma (122a) disposed within one or more micro-cavities of the first plurality of micro-cavities (116a);
a second electrode (110b) including a second plurality of micro-cavities; and
a second plasma (122b) disposed within one or more micro-cavities of the second plurality of micro-cavities (116b); and
an inter-electrode gap (120) disposed between the first electrode (110a) and the second electrode (110b),

wherein the first electrode (110a) is configured to emit electrons (102) through the inter-electrode gap (120) to the second electrode (110b) configured to collect the electrons (102).

2.   The structured plasma cell of claim 1, further comprising a bulk plasma (122) disposed within the inter-electrode gap (120).

3.   The structured plasma cell of claim 1, further comprising an insulator (124) disposed within the inter-electrode gap (120).

4. The structured plasma cell of claim 1, wherein a quantity of the first plurality of micro-cavities (116a) is less than a quantity of the second plurality of micro-cavities (116b).

5. The structured plasma cell of claim 1, wherein the first electrode (110a) comprises a first plurality of channels (118) configured to electrically connect a first micro-cavity (116a) of the first plurality of micro-cavities (116) with a second micro-cavity (116b) of the first plurality of micro-cavities (116).

6. The structured plasma cell of claim 1, further comprising a heat source (106) configured to heat the first electrode (110a) that is configured to emit electrons (102) into the inter-electrode gap (120).

7. A method (400) of operating a structured plasma cell for a structured plasma cell energy converter for a nuclear reactor to produce electricity, wherein the structured plasma cell comprises a first electrode (110a), a second electrode (110b) and an inter-electrode gap (120), the first electrode (110a) including a body (114a), a first surface (112a) surrounding the body (114a), a first plurality of micro-cavities (116a) and a first plasma (122a), the first plurality of micro-cavities (116a) disposed on the surface (112a) and within the body (114a) of the first electrode (110a), the first plasma (122a) disposed within the first plurality of micro-cavities (116a), the second electrode (110b) including a second surface (112b) and a second plasma (122b), the second surface (112b) defining a second micro-cavity (116b) and the second plasma (122b) disposed within the second micro-cavity (116b), wherein the first electrode (110a) is configured to emit electrons (102) through the inter-electrode gap (120) to the second electrode (110b) configured to collect the electrons (102),
the method (400) comprising:

Generating (402), by an electromagnetic, EM, source (302), an EM field (304);
Propagating (404) the EM field (304) in a direction parallel to the second surface (112b); and
Increasing (406), by the EM field (304), a temperature of the electrons (102) disposed within the second plasma (122b).

8. The method (400) of claim 7, wherein the first surface (112a) includes a conductive material.

9. The method (400) of claim 7, further comprising absorbing the EM field (304) into the second plasma (122b).

10. The method (400) of claim 9, further comprising:

ionizing the first plasma (122a) using charged particles from a nuclear reaction;
emitting the electrons (102) from the first surface (112a) of the first electrode (110a) into the first plasma (122a) disposed within the first plurality of micro-cavities (116a);
conducting the emitted electrons (102) from the first plurality of micro-cavities (116a) through the inter-electrode gap (120) to the second micro-cavity (116b); and
collecting the emitted electrons (102) at the second surface (112b) of the second electrode (110b).

11. The method (400) of claim 7, further comprising providing an insulator (124) at the inter-electrode gap (120) disposed between the first electrode (110a) and the second electrode (110b).

12. The method (400) of claim 7, wherein the EM field (304) comprises one of:

a radiofrequency wave; or
a microwave.

13. The method (400) of claim 7, wherein the increased temperature of the electrons (102) in the second plasma (122b) increases an amount of electricity produced by the structured plasma cell.


**Patentansprüche**

1. Strukturierte Plasmazelle für einen strukturierten Plasmazellen-Energiewandler für einen Kernreaktor, wobei die strukturierte Plasmazelle aufweist:

eine erste Elektrode (110a), die einen Körper (114a), eine den Körper (114a) umgebende Oberfläche (112a) und eine erste Mehrzahl von Mikrohohlräumen (116a) aufweist, die auf der Oberfläche (112a) und innerhalb des Körpers (114a) der ersten Elektrode (110a) angeordnet sind;

ein erstes Plasma (122a), das innerhalb eines oder mehrerer Mikrohohlräume der ersten Mehrzahl von Mikrohohlräumen (116a) angeordnet ist;

eine zweite Elektrode (110b), die eine zweite Mehrzahl von Mikrohohlräumen aufweist; und

ein zweites Plasma (122b), das in einem oder mehreren Mikrohohlräumen der zweiten Mehrzahl von Mikrohohlräumen (116b) angeordnet ist; und

einen Elektrodenzwischenraum (120), der zwischen der ersten Elektrode (110a) und der zweiten Elektrode (110b) angeordnet ist,

wobei die erste Elektrode (110a) konfiguriert ist, um Elektronen (102) durch den Elektrodenzwischenraum (120) zu der zweiten Elektrode (110b) zu emittieren, die konfiguriert ist, um die Elektronen (102) aufzufangen.

2. Strukturierte Plasmazelle nach Anspruch 1, des Weiteren aufweisend ein innerhalb des Elektrodenzwischenraums (120) angeordnetes Bulk-Plasma (122).

3. Strukturierte Plasmazelle nach Anspruch 1, des Weiteren aufweisend einen Isolator (124), der in dem Elektrodenzwischenraum (120) angeordnet ist.

4. Strukturierte Plasmazelle nach Anspruch 1, wobei eine Anzahl der ersten Mehrzahl von Mikrohohlräumen (116a) kleiner als eine Anzahl der zweiten Mehrzahl von Mikrohohlräumen (116b) ist.

5. Strukturierte Plasmazelle nach Anspruch 1, wobei die erste Elektrode (110a) eine erste Mehrzahl von Kanälen (118) aufweist, die konfiguriert sind, um einen ersten Mikrohohlraum (116a) der ersten Mehrzahl von Mikrohohlräumen (116) elektrisch mit einem zweiten Mikrohohlraum (116b) der ersten Mehrzahl von Mikrohohlräumen (116) zu verbinden.

6. Strukturierte Plasmazelle nach Anspruch 1, des Weiteren aufweisend eine Wärmequelle (106), die konfiguriert ist, um die erste Elektrode (110a) zu erhitzen, die konfiguriert ist, um Elektronen (102) in den Elektrodenzwischenraum (120) zu emittieren.

7. Verfahren (400) zum Betreiben einer strukturierten Plasmazelle für einen strukturierten Plasmazellen-Energiewandler für einen Kernreaktor zum Produzieren von Elektrizität, wobei die strukturierte Plasmazelle eine erste Elektrode (110a), eine zweite Elektrode (110b) und einen Elektrodenzwischenraum (120) aufweist, wobei die erste Elektrode (110a) einen Körper (114a), eine den Körper (114a) umgebende erste Oberfläche (112a), eine erste Mehrzahl von Mikrohohlräumen (116a) und ein erstes Plasma (122a) aufweist, wobei die erste Mehrzahl von Mikrohohlräumen (116a) auf der Oberfläche (112a) und innerhalb des Körpers (114a) der ersten Elektrode (110a) angeordnet ist, das erste Plasma (122a) innerhalb der ersten Mehrzahl von Mikrohohlräumen (116a) angeordnet ist, die zweite Elektrode (110b) eine zweite Oberfläche (112b) und ein zweites Plasma (122b) aufweist, wobei die zweite Oberfläche (112b) einen zweiten Mikrohohlraum definiert (116b) und das zweite Plasma (122b) innerhalb des zweiten Mikrohohlraums (116b) angeordnet ist, wobei die erste Elektrode (110a) konfiguriert ist, um Elektronen (102) durch den Elektrodenzwischenraum (120) zu der zweiten Elektrode (110b) zu emittieren, die konfiguriert ist, um die Elektronen (102) aufzufangen, wobei das Verfahren (400) aufweist:

Erzeugen (402) eines EM-Feldes (304) durch eine elektromagnetische Quelle, EM-Quelle, (302);
Ausbreiten (404) des EM-Feldes (304) in einer Richtung parallel zu der zweiten Oberfläche (112b); und
Erhöhen (406), durch das EM-Feld (304), einer Temperatur der Elektronen (102), die in dem zweiten Plasma (122b) angeordnet sind.

8. Verfahren (400) nach Anspruch 7, wobei die erste Oberfläche (112a) ein leitfähiges Material aufweist.

9. Verfahren (400) nach Anspruch 7, des Weiteren aufweisend das Absorbieren des EM-Feldes (304) in das zweite Plasma (122b).

10. Verfahren (400) nach Anspruch 9, des Weiteren aufweisend:

Ionisieren des ersten Plasmas (122a) unter Verwendung geladener Partikel aus einer Kernreaktion;
Emittieren der Elektronen (102) von der ersten Oberfläche (112a) der ersten Elektrode (110a) in das erste Plasma (122a), das innerhalb der ersten Mehrzahl von Mikrohohlräumen (116a) angeordnet ist;

Leiten der emittierten Elektronen (102) aus der ersten Mehrzahl von Mikrohohlräumen (116a) durch den Elektrodenzwischenraum (120) zu dem zweiten Mikrohohlraum (116b); und

Auffangen der emittierten Elektronen (102) an der zweiten Oberfläche (112b) der zweiten Elektrode (110b).

11. Verfahren (400) nach Anspruch 7, des Weiteren aufweisend das Bereitstellen eines Isolators (124) an dem Elektrodenzwischenraum (120), der zwischen der ersten Elektrode (110a) und der zweiten Elektrode (110b) angeordnet ist.

12. Verfahren (400) nach Anspruch 7, wobei das EM-Feld (304) eines aufweist von:

einer Radiofrequenzwelle; oder
einer Mikrowelle.

13. Verfahren (400) nach Anspruch 7, wobei die erhöhte Temperatur der Elektronen (102) in dem zweiten Plasma (122b) eine von der strukturierten Plasmazelle erzeugte Menge an Elektrizität erhöht.

## Revendications

1. Cellule à plasma structurée pour un convertisseur d'énergie à cellule à plasma structurée pour un réacteur nucléaire, la cellule à plasma structurée comprenant :

une première électrode (110a) comportant un corps (114a), une surface (112a) entourant le corps (114a), et une première pluralité de microcavités (116a) disposées sur la surface (112a) et dans le corps (114a) de la première électrode (110a) ;
un premier plasma (122a) disposé dans une ou plusieurs microcavités de la première pluralité de microcavités (116a) ;
une seconde électrode (110b) comportant une seconde pluralité de microcavités ; et
un second plasma (122b) disposé dans une ou plusieurs microcavités de la seconde pluralité de microcavités (116b) ; et
un espace inter-électrodes (120) disposé entre la première électrode (110a) et la seconde électrode (110b), dans lequel la première électrode (110a) est configurée pour émettre des électrons (102) à travers l'espace inter-électrodes (120) vers la seconde électrode (110b) configurée pour collecter les électrons (102).

2. Cellule à plasma structuré selon la revendication 1, comprenant en outre un plasma en vrac (122) disposé dans l'espace inter-électrodes (120).

3. Cellule à plasma structurée selon la revendication 1, comprenant en outre un isolateur (124) disposé dans l'espace inter-électrodes (120).

4. Cellule à plasma structurée selon la revendication 1, dans laquelle une quantité de la première pluralité de microcavités (116a) est inférieure à une quantité de la seconde pluralité de microcavités (116b).

5. Cellule à plasma structurée selon la revendication 1, dans laquelle la première électrode (110a) comprend une première pluralité de canaux (118) configurés pour connecter électriquement une première microcavité (116a) de la première pluralité de microcavités (116) avec une seconde microcavité (116b) de la première pluralité de microcavités (116).

6. Cellule à plasma structurée selon la revendication 1, comprenant en outre une source de chaleur (106) configurée pour chauffer la première électrode (110a) qui est configurée pour émettre des électrons (102) dans l'espace inter-électrodes (120).

7. Procédé (400) de fonctionnement d'une cellule à plasma structurée pour un convertisseur d'énergie à cellule à plasma structurée pour un réacteur nucléaire afin de produire de l'électricité, dans lequel la cellule à plasma structurée comprend une première électrode (110a), une seconde électrode (110b) et un espace inter-électrodes (120), la première électrode (110a) comportant un corps (114a), une première surface (112a) entourant le corps (114a), une première pluralité de microcavités (116a) et un premier plasma (122a), la première pluralité de microcavités (116a) disposée sur la surface (112a) et à l'intérieur du corps (114a) de la première électrode (110a), le premier plasma (122a) disposé dans la première pluralité de microcavités (116a), la seconde électrode (110b) comportant une seconde surface (112b) et un second plasma (122b), la seconde surface (112b) définissant une seconde microcavité (116b) et le second plasma (122b) disposé dans la seconde microcavité (116b), dans lequel la première électrode (110a) est configurée pour émettre des électrons (102) à travers l'espace inter-électrodes (120) vers la seconde électrode (110b) configurée pour collecter les électrons (102), le procédé (400) comprenant :

la génération (402), par une source électromagnétique, EM (302), d'un champ EM (304) ;
la propagation (404) du champ EM (304) dans une direction parallèle à la seconde surface (112b) ; et
l'augmentation (406), par le champ EM (304), d'une température des électrons (102) disposés dans le second plasma (122b).

8. Procédé (400) selon la revendication 7, dans lequel la première surface (112a) comporte un matériau conducteur.

9. Procédé (400) selon la revendication 7, comprenant en outre l'absorption du champ EM (304) dans le second plasma (122b).

10. Procédé (400) selon la revendication 9, comprenant en outre :

l'ionisation du premier plasma (122a) à l'aide de particules chargées provenant d'une réaction nucléaire ;
l'émission des électrons (102) à partir de la première surface (112a) de la première électrode (110a) dans le premier plasma (122a) disposé à l'intérieur de la première pluralité de microcavités (116a) ;
la conduction des électrons émis (102) de la première pluralité de microcavités (116a) à travers l'espace inter-électrodes (120) vers la seconde microcavité (116b) ; et
la collecte des électrons émis (102) au niveau de la seconde surface (112b) de la seconde électrode (110b).

11. Procédé (400) selon la revendication 7, comprenant en outre la fourniture d'un isolateur (124) au niveau de l'espace inter-électrodes (120) disposé entre la première électrode (110a) et la seconde électrode (110b).

12. Procédé (400) selon la revendication 7, dans lequel le champ EM (304) comprend l'une parmi :

une onde de radiofréquence ; ou
une micro-onde.

13. Procédé (400) selon la revendication 7, dans lequel l'augmentation de la température des électrons (102) dans le second plasma (122b) augmente une quantité d'électricité produite par la cellule à plasma structurée.

_Fig-1A_

_Fig-1B_

_Fig-2_

*Fig-3A*

16

*Fig-3B*

400

Generating, by an EM Source, an EM Field
That Propagates in a Propagation
Direction Parallel to the Second Surface ——402

Propagating the EM Field in a Direction
Parallel to the Second Surface ——404

Increasing, by the EM Field, a Temperature of
Electrons Disposed within the Second Plasma ——406

_Fig-4_

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AUSTIN TROY LO**. *Fission plasmas and their novel application to power producing nuclear reactors in space*, 2020, 1-117, https://escholarship.org/uc/item/1x52nlgw